# EUROPEAN PATENT APPLICATION

(11) **EP 3 378 562 A1**
(43) Date of publication of application: **26.09.2018**
(21) Application number: 18159398.9
(22) Date of filing: 01.03.2018
(51) Int. Cl.: B01L 3/02, G01N 35/10

(54) **DROPLET DISPENSING APPARATUS**

(30) Priority: 24.03.2017 JP 2017059797
(71) Applicant: Toshiba TEC Kabushiki Kaisha, Tokyo 141-8562 (JP)
(72) Inventor: HIGUCHI, Masaaki, Shinagawa-ku,, Tokyo 141-8562 (JP); SHIMIZU, Seiya, Shinagawa-ku,, Tokyo 141-8562 (JP); KUSUNOKI, Ryutaro, Shinagawa-ku,, Tokyo 141-8562 (JP); YOKOYAMA, Shuhei, Shinagawa-ku,, Tokyo 141-8562 (JP)
(74) Representative: Takeuchi, Maya

(57) **Abstract**

A droplet dispensing apparatus includes a droplet ejecting array having a plurality of nozzle groups (171a-171h), each nozzle group including a plurality of nozzles arranged in columns in a first direction and rows in a second direction that intersects the first direction, and the plurality of nozzles being arranged in a third direction, a light emitting unit (231) configured to emit light along an optical path in the third direction oblique with respect to the first direction, a light receiving unit (232) configured to receive light from the light emitting unit (231), the light receiving unit (232) being on an opposite side of the droplet ejecting array from the light emitting unit (231), and a controller (234) configured to receive signals from the light receiving unit (232) according to light intensity as detected by the light receiving unit, and adjust ejection timings (234) such that each of the plurality of nozzle groups (171a-171h) ejects at a different timing.

## Description

### FIELD

Embodiments described herein relate generally to the field of microanalysis, and more particularly to a droplet dispensing apparatus and an analytic system comprising the same.

### BACKGROUND

For use in biological and pharmaceutical research and development, medical diagnosis or testing, or agricultural experiment, analytic devices and testing methods involving dispensing solution in volumes with in a picoliter (pL) to microliter (µL) range are often used.

For improved speed in testing and evaluation, a droplet ejecting device typically ejects liquid droplets simultaneously from multiple nozzles into different wells of a microplate (also referred to as a multi-well plate) or the like.

When liquid droplets are being dispensed simultaneously from a plurality of nozzles, there is a possibility that some of nozzles may not discharge the liquid as intended. In such a case, the intended amount of liquid is not dispensed from malfunctioning nozzle, which may cause erroneous evaluation results in some testing applications.

### SUMMARY OF INVENTION

To solve the above-cited problems, there is provided a droplet dispensing apparatus comprising:
a droplet ejecting array having a plurality of nozzle groups, from each of which solution can be ejected into a well opening of a microplate on a baseline, each nozzle group including a plurality of nozzles arranged in columns in a first direction and rows in a second direction that intersects the first direction, and the plurality of nozzles being arranged in a line in a third direction;
a light emitting unit configured to emit light along an optical path in the third direction oblique with respect to the first direction and the second direction;
a light receiving unit disposed along the optical path and configured to receive light from the light emitting unit, the light receiving unit being on an opposite side of the droplet ejecting array from the light emitting unit; and
a controller configured to
   receive signals from the light receiving unit according to light intensity as detected by the light receiving unit, and
   adjust ejection timings such that each of the plurality of nozzle groups ejects at a different timing.

In an exemplary embodiment preferably the controller may adjust ejection timings for the plurality of nozzle groups such that solutions being ejected from any two nozzle groups in the plurality of nozzle groups do not overlap along the optical path.

The droplet dispensing apparatus according to the embodiments preferably may further comprise a droplet ejection unit configured to dispense liquid towards the base plate.

The droplet dispensing apparatus according to the embodiments preferably may further comprise:
a sealed box enclosing the droplet ejection array and at least a portion of the base plate; and
a spraying device and configured to spray a liquid into the sealed box.

The droplet dispensing apparatus according to the embodiments preferably may further comprise a needle-like ejection member on the droplet ejection array configured to engage and open a lid on a periphery of a well opening of the microplate.

The droplet dispensing apparatus according to the embodiments preferably may further comprise a base plate on which the microplate can be disposed.

The droplet dispensing apparatus according to the embodiments preferably may further comprise:
a plurality of pressure chambers on the base plate, each pressure chamber in the plurality being fluidly connected to a respective nozzle in the plurality of nozzle groups;
a plurality of actuators configured to change pressure in the pressure chamber and cause solution to be ejected from the pressure chamber from the respective nozzle; and
a plurality of solution holding containers on the base plate, each having a solution receiving port for receiving solution and a solution outlet port for supplying solution to the pressure chamber.

Preferably in the embodiments each of the plurality of actuators may be configured with a piezoelectric element of a lead-free material.

The droplet dispensing apparatus according to the embodiments preferably may further comprise a mounting module to which the droplet ejecting array can be detachably attached.

In another exemplary embodiment there is also provided an analytic system comprising the droplet dispensing apparatus according to the embodiments.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a perspective view of a droplet dispensing apparatus according to a first embodiment.
Fig. 2 is a top view illustrating of a droplet ejecting device of a droplet dispensing apparatus.
Fig. 3 is a bottom view of a droplet ejecting device of a droplet dispensing apparatus.
Fig. 4 is a cross-sectional view taken along line F4-F4 in Fig. 2.
Fig. 5 is a plan view of a droplet ejecting array of a droplet ejecting device.
Fig. 6 is a cross-sectional view taken along line F6-F6 in Fig. 5.
Fig. 7 is a schematic diagram of a droplet detection unit of a droplet dispensing apparatus.
Fig. 8 is a diagram illustrating ejection timings for different nozzle groups.
Fig. 9 is a diagram for explaining an operation of a droplet detection unit of the droplet dispensing apparatus.
Fig. 10 is a diagram illustrating adjusted ejection timings for different nozzle groups and drive pulses applied to respective nozzle groups.
Fig. 11 is a perspective view of a droplet dispensing apparatus according to a second embodiment.
Fig. 12 is a perspective view of a droplet dispensing apparatus according to a third embodiment.
Fig. 13 is a cross-sectional view of a microplate.

### DETAILED DESCRIPTION

In general, according to one embodiment, a droplet dispensing apparatus includes a droplet ejecting array having a plurality of nozzle groups, from each of which solution can be ejected into a well opening of a microplate on a baseline, each nozzle group including a plurality of nozzles arranged in columns in a first direction and rows in a second direction that intersects the first direction, and the plurality of nozzles being arranged in a line in a third direction, a light emitting unit configured to emit light along an optical path in the third direction oblique with respect to the first direction and the second direction, a light receiving unit disposed along the optical path and configured to receive light from the light emitting unit, the light receiving unit being on an opposite side of the droplet ejecting array from the light emitting unit, and a controller configured to receive signals from the light receiving unit according to light intensity as detected by the light receiving unit, and adjust ejection timings such that each of the plurality of nozzle groups ejects at a different timing.

Hereinafter, droplet dispensing apparatuses according to example embodiments will be described with reference to the drawings. It should be noted, that the particular embodiments explained below are some possible examples of a droplet dispensing apparatus according to the present disclosure and do not limit the possible configurations, specifications, or the like of droplet dispensing apparatuses according to the present disclosure.

### (First Embodiment)

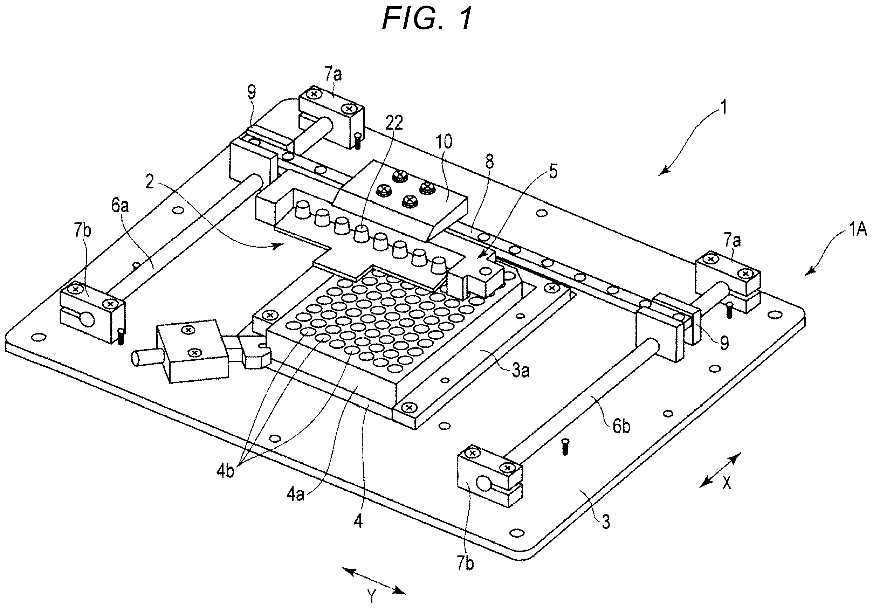

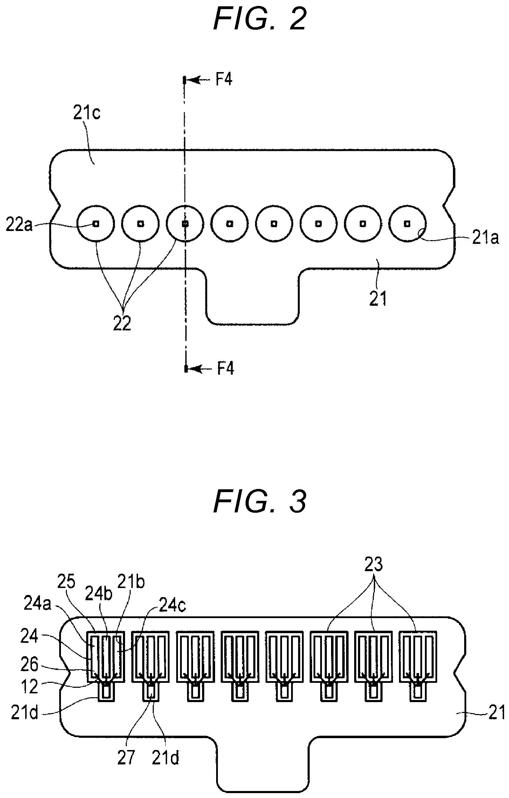

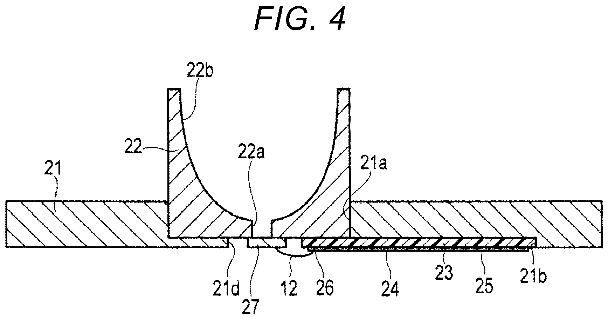

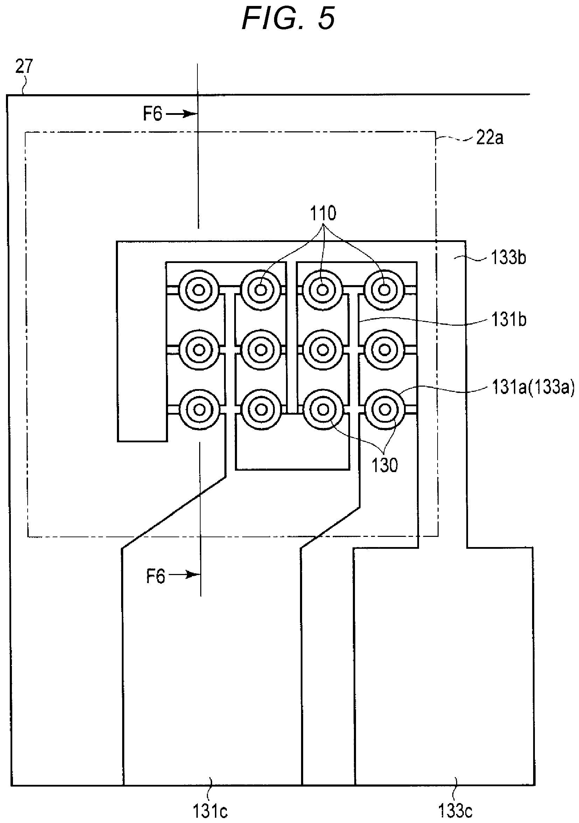

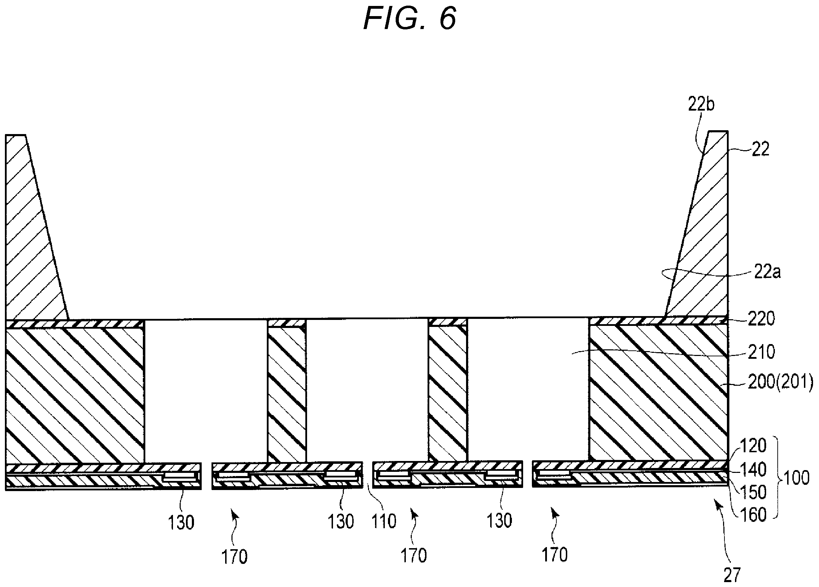

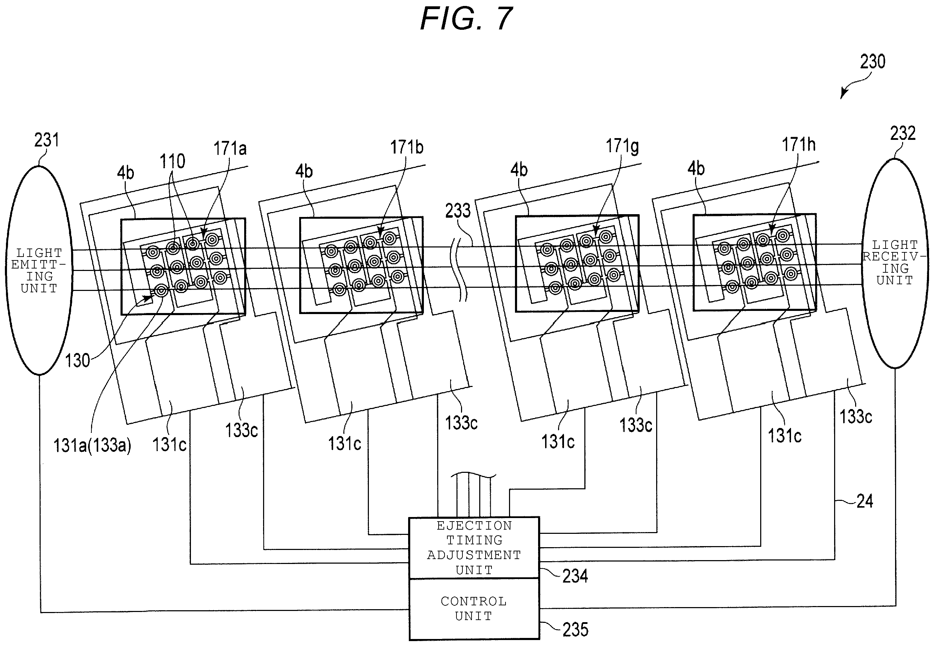

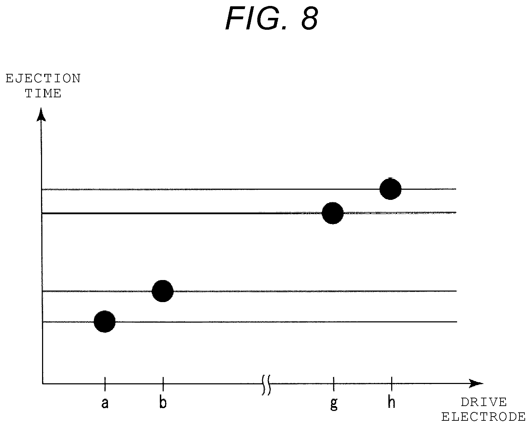

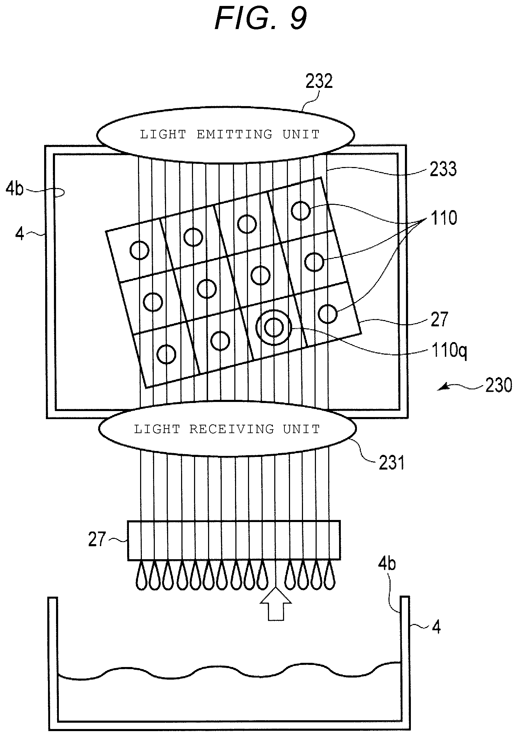

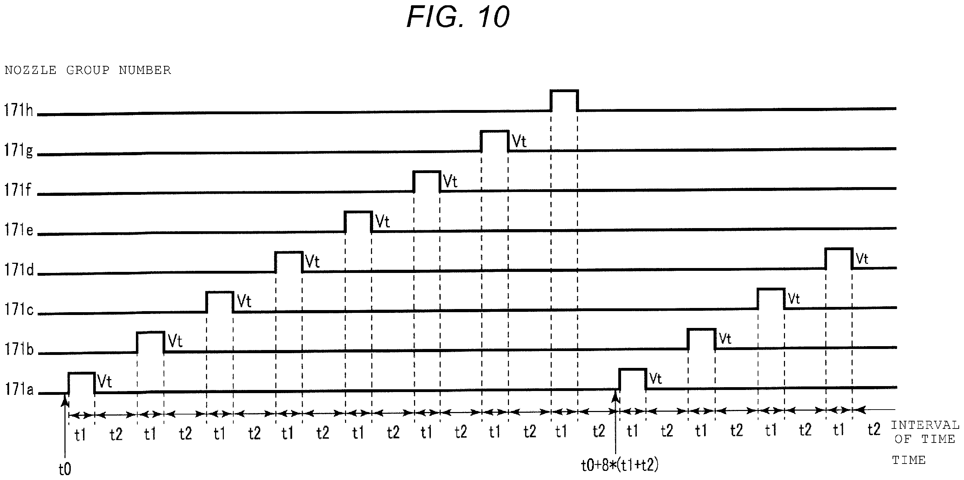

An example of a droplet dispensing apparatus 1 according to a first embodiment is described with reference to Fig. 1 through Fig. 10. Fig. 1 is a perspective view of the droplet dispensing apparatus 1 according to the first embodiment. Fig. 2 is a top view of a droplet ejecting device 2, which is mounted in the droplet dispensing apparatus 1. Fig. 3 is a bottom view a surface of the droplet ejecting device 2 from which droplets are discharged. Fig. 4 is a cross-sectional view taken along line F4-F4 in Fig. 2. Fig. 5 is a plan view of a droplet ejecting array 27 of the droplet ejecting device 2. Fig. 6 is a cross-sectional view taken along line F6-F6 in Fig. 5. Fig. 7 is a schematic diagram of a droplet detection unit 230 of the droplet dispensing apparatus 1. Fig. 8 is a diagram illustrating ejection timing for different nozzle groups in the droplet dispensing apparatus 1. Fig. 9 is a diagram for explaining an operation of the droplet detection unit 230 of the droplet dispensing apparatus 1. Fig. 10 is a diagram illustrating adjusted ejection timings for different nozzle groups and drive pulses applied to the respective nozzle groups in the droplet dispensing apparatus 1.

The droplet dispensing apparatus 1 has a main body 1A, which includes a base plate 3 of the rectangular plate shape and a mounting module 5. In the present embodiment, a microplate 4, which may also be referred to as a receiving portion, a multiwell plate, or a microwell plate in some contexts, has 96 wells into which a solution can be dispensed. Microplates having 96 wells are commonly used in a biochemistry research and clinical examination. However, the microplate 4 is not limited to having 96 wells and may have any other number of wells, such as 384 wells, 1536 wells, 3456 wells, or 6144 wells.

The microplate 4 is located at a middle position of the base plate 3 and can be secured to and detached from a plate attaching portion 3a of the base plate 3. A pair X-direction guide rails 6a and 6b extending in the X-direction is provided at both sides of the microplate 4. The ends of each of the X-direction guide rails 6a and 6b are respectively fixed to fixing supports 7a and 7b protruding on the base plate 3.

A Y-direction guide rail 8 extending in the Y-direction is provided between the X-direction guide rails 6a and 6b. Both ends of the Y-direction guide rail 8 are respectively fixed to X-direction movable supports 9 which can slide in the X-direction along the X-direction guide rails 6a and 6b.

A Y-direction movable support 10 is provided, on which the mounting module 5 is movable in the Y-direction along the Y-direction guide rail 8. The mounting module 5 is mounted on the Y-direction movable support 10. The droplet ejecting device 2, which serves as a droplet ejecting unit, is fixed to the mounting module 5. Thus, the droplet ejecting device 2 can move to any position in the X- and Y-directions, which are orthogonal to each other in this instance, by a combination of a movement of the Y-direction movable support 10 moving in the Y-direction along the Y-direction guide rail 8 and a movement of the X-direction movable supports 9 moving in the X-direction along the X-direction guide rails 6a and 6b. Furthermore, the droplet ejecting device 2 can be configured to be detachably mounted on the mounting module 5.

The droplet ejecting device 2 according to the first embodiment has a flat base plate 21. As illustrated in Fig. 2, on a top surface of the base plate 21 eight solution holding containers 22 are arranged side by side in a line in the Y-direction. In some embodiments, the base plate 21 may have more or less than eight solution holding containers 22. Each of the solution holding containers 22 is a bottomed cylindrically-shaped container with an open top surface as illustrated in Fig. 4. On the top surface of the base plate 21, cylindrically-shaped recessed portions 21a are formed at positions corresponding to the respective solution holding containers 22. The bottom portion of each of the solution holding containers 22 is adhesively fixed to each of the recessed portions 21a. Furthermore, on the bottom portion of the solution holding container 22, a solution outlet opening 22a (referred simply to as an opening hereinafter), through which solution is ejected, is formed at the central position. An opening area of a top opening 22b is larger than an opening area of the solution outlet opening 22a.

As illustrated in Fig. 3, on a bottom surface of the base plate 21, an electrical circuit board 23 is provided at each of the solution holding containers 22. Each of the electrical circuit boards 23 is a rectangular flat plate member. On the side of the back surface of the base plate 21. As illustrated in Fig. 4, a rectangular recessed portion 21b for mounting the electrical circuit board 23 and a droplet ejecting opening 21d communicating with the recessed portion 21b are formed. Circumference of the recessed portion 21b extends from the solution holding container 22 towards an upper end of the base plate 21 (an upper end in Fig. 3 and a right end in Fig. 4). A portion of the recessed portion 21b overlaps a part of the solution holding container 22 as illustrated in Fig. 4. The electrical circuit board 23 is adhesively fixed to the recessed portion 21b.

On the electrical circuit board 23, an electrical circuit board wiring 24 is patterned on a surface opposite to the recessed portion 21b. The electrical circuit board wiring 24 has three wiring patterns 24a, 24b, and 24c formed therein, which are respectively connected to a terminal portion 131c of a lower electrode 131 and two terminal portions 133c of an upper electrode 133.

At one end portion of the electrical circuit board wiring 24, a control signal input terminal 25 for receiving an external control signal is formed. At the other end portion of the electrical circuit board wiring 24, an electrode terminal connector 26 is formed. The electrode terminal connector 26 electrically connects the lower electrode terminal portion 131c and the upper electrode terminal portions 133c formed in the droplet ejecting array 27.

Furthermore, the base plate 21 has a through-hole for the droplet ejecting opening 21d. The droplet ejecting opening 21d is a rectangular through-hole as illustrated in Fig. 3, and is formed at a position overlapping the recessed portions 21a on the side of the back surface of the base plate 21.

The droplet ejecting array 27 illustrated in Fig. 5 is adhesively fixed to the lower surface of the solution holding container 22 as to cover the solution outlet opening 22a of the solution holding container 22. The droplet ejecting array 27 is located at a position corresponding to the droplet ejecting opening 21d of the base plate 21.

As illustrated in Fig. 6, the droplet ejecting array 27 is formed by stacking a nozzle plate 100 and a pressure chamber structure 200 in layers. The nozzle plate 100 includes a nozzle 110 for discharging solution, a diaphragm 120, a drive element 130, a protective film 150, and a liquid-repellent film 160. An actuator 170 is formed with the diaphragm 120 and the drive element 130. In the present embodiment, the actuator 170 can be a piezoelectric element made from a lead-free material containing no lead component, or made from lead-containing material.

The droplet ejecting array 27 has a nozzle group including a plurality of the nozzles 110 arranged side by side in a X-Y plane that is parallel to the X-direction and the Y-direction, as illustrated in Fig. 5. In the example embodiment described herein, three nozzles 110 are arranged in a vertical direction (also referred to as a first direction), four nozzles 110 are arranged in a horizontal direction (also referred to as a second direction), and one set of twelve nozzles 110 arrayed in three rows and four columns is referred to as a "nozzle group 171". In other words, in the present embodiment, a plurality of nozzles 110 is arranged in each of the first direction and the second direction as illustrated in Fig. 5. The terminal portion 131c of the lower electrode 131 is spaced from the nozzle group in the first direction, and the terminal portions 131c and other terminal portions 131c for other nozzle groups are aligned in the second direction.

Furthermore, in the droplet ejecting array 27 according to the present embodiment, one nozzle group is located at a position corresponding to one opening 22a of one of the eight solution holding containers 22. Twelve nozzles 110 in one nozzle group 171 are arranged only within one well opening 4b of the microplate 4.

The diaphragm 120 is formed, for example, integrally with the pressure chamber structure 200. The drive element 130 is formed for each nozzle 110. The drive element 130 has an annular shape surrounding the nozzle 110. The shape of the drive element 130 is not limited, and can be, for example, a C shape formed with a part of the circular ring removed.

The diaphragm 120 deforms in the thickness direction thereof by an operation of the drive element 130, which is in a planar shape. The droplet ejecting device 2 ejects a solution supplied to each nozzle 110 according to a pressure change occurring in a pressure chamber 210 of the pressure chamber structure 200 due to the deformation of the diaphragm 120.

The main body 1A of the droplet dispensing apparatus 1 includes a droplet detection unit 230 illustrated in Fig. 7. The droplet detection unit 230 includes a light emitting unit 231, a light receiving unit (a light receiving sensor) 232, an ejection timing adjustment unit 234, and a control unit 235. The light emitting unit 231 includes, for example, a light source having a plurality of light-emitting diode (LED) elements arranged side by side. Furthermore, the light receiving unit 232 includes, for example, a charge-coupled device (CCD) camera. The control unit 235 includes, for example, a microprocessor and it connected to the light emitting unit 231 and the light receiving unit 232. The light emitting unit 231 and the light receiving unit 232 can be formed integrally in the droplet ejecting device 2, or may be provided in the mounting module 5.

As illustrated in Fig. 7, the light emitting unit 231 and the light receiving unit 232 are located on either sides of a plurality of nozzle groups each having twelve nozzles 110 (a first nozzle group 171a, closest to the light emitting unit 232, through an eighth nozzle group 171h, closest to the light receiving unit 232) arranged in a line in a third direction. An optical path 233 between the light emitting unit 231 and the light receiving unit 232 along the third direction intersects a trajectory of droplets ejected from the nozzles 110.

Along the optical path 233, horizontally-polarized light is emitted from the light emitting unit 231 toward the light receiving unit 232. The droplet detection unit 230 is driven by the control unit 235. Then, when droplets block light along the optical path 233, light intensity received by the light receiving unit 232 is reduced. The control unit 235 receives an output corresponding to the light intensity detected by the light receiving unit 232. When the detected light intensity is less than a specified amount, the control unit 235 detects droplets are being ejected from the nozzles 110.

In the main body 1A of the droplet dispensing apparatus 1, the optical path 233 is arranged obliquely with respect to the second direction along the columns of nozzles 110 in a nozzle group. In the example embodiment described herein, the droplet ejecting array 27 is adhesively fixed to the droplet ejecting opening 21d of the base plate 21 of the droplet ejecting device 2, and located obliquely with respect to the base plate 21.

Furthermore, the control unit 235 includes the ejection timing adjustment unit 234, which controls timing of ejecting of droplets from the droplet ejecting device 2. The ejection timing adjustment unit 234 adjusts ejection timing of droplets from the eight nozzle groups 171 (nozzle groups 171a to 171h) at different timings.

The terminal portion 131c of the lower electrode 131 and the terminal portions 133c of the upper electrode 133 are formed for each of the eight nozzle groups and are connected to the ejection timing adjustment unit 234 via the electrical circuit board wiring 24. Fig. 8 is a diagram illustrating ejection timings for different nozzle groups. In Fig. 8, the ordinate axis indicates an ejection time, and the abscissa axis indicates the drive electrodes for the eight nozzle groups (the first nozzle group 171a to the eighth nozzle group 171h) of the droplet ejecting device 2. In Fig. 8, the label "a" indicates the first nozzle group 171a, and label "b" indicates the second nozzle group 171b and so forth up to label "h" that indicates the eighth nozzle group 171h.

As illustrated in Fig. 8, the ejection timing adjustment unit 234 adjusts ejection timings for the eight nozzle groups 171 (the first nozzle group 171a through the eighth nozzle group 171h) to different timings.

Fig. 10 illustrates adjusted ejection timings for the of nozzle groups and drive pulses to be applied to the respective nozzle groups at the adjusted ejection timings. As illustrated in Fig. 10, when a start button or the like is pressed, at time t0, the control unit 235 applies a drive pulse having a pulse width t1 and a voltage Vt to drive the first nozzle group 171a.

After that, the control unit 235 applies a drive pulse having a pulse width t1 and a voltage Vt to drive the second nozzle group 171b after elapse of a predetermined interval t2.

Subsequently, the control unit 235 sequentially applies drive pulses (each having a pulse width t1 and a voltage Vt to drive the third nozzle group 171c through the eighth nozzle group 171h at intervals of the predetermined interval t2. After the eighth nozzle group 217h is driven, a sequence of the drive pluses to drive the first nozzle group 217a through the eighth nozzle group 217h is repeated.

That is, after the eighth nozzle group 171h has been driven at time t0+8×(t1+t2), the control unit 235 re-applies a drive pulse having the pulse width t1 and the voltage Vt to drive the first nozzle group 171a. After that, the control unit 235 sequentially applies drive pulses each having the pulse width t1 and the voltage Vt to the drive the second nozzle group 171b through the eighth nozzle group 171h at the predetermined intervals t2.

In the droplet dispensing apparatus 1 according to the present embodiment, the droplet ejecting array 27 of the droplet ejecting device 2 is mounted on the mounting module 5. When the droplet ejecting device 2 is use, a predetermined amount of solution is supplied to the solution holding container 22 from the top open portion 22b of the solution holding container 22 by a pipette or the like (not illustrated). The solution is held at the inner surface of the solution holding container 22. The opening portion 22a at the bottom portion of the solution holding container 22 communicates with the droplet ejecting array 27. The solution held in the solution holding container 22 flows into each pressure chamber 210 of the droplet ejecting array 27 via the opening portion 22a.

A voltage control signal that is input to the control signal input terminal 25 is transmitted from the electrode terminal connector 26 to the terminal portion 131c of the lower electrode 131 and the terminal portions 133c of the upper electrode 133. In response to the voltage control signal applied to the drive element 130, the diaphragm 120 deforms to change the volume of the pressure chamber 210, so that the solution is ejected as solution droplets from the nozzle 110 of the droplet ejecting array 27. In the present embodiment, the solution droplets are simultaneously dropped from twelve nozzles 110 to one well opening 4b of the microplate 4. Thus, a predetermined amount of solution is dropped from the nozzle 110 to each well opening 4b of the microplate 4.

An amount of solution that is dropped is controlled by a number of repetitions of one-droplet dropping from each nozzle 110, and thus it is possible to control dropping of solution on the order of picoliter (pL) to microliter (µL).

In the present embodiment, the droplet detection unit 230 and the ejection timing adjustment unit 234 are driven during an operation of solution dropping from the nozzles 110 of the droplet ejecting array 27. The droplet detection unit 230 detects droplets are being ejected from the nozzles 110 by detecting a reduction in the light intensity detected by the light receiving unit 232 when light in the optical path 233 is blocked by the droplets.

An operation of detecting droplets via the droplet detection unit 230 in the present embodiment will be described with reference to Fig. 9. In the example illustrated in Fig. 9, one nozzle group has twelve nozzles 110 arrayed in three rows and four columns located along the optical path 233 between the light emitting unit 231 and the light receiving unit 232. In a case where clogging occurs in at least one nozzle 110 among the twelve nozzles 110 in one nozzle group, the nozzle 110 in which clogging occurs is referred to as a "nozzle 110q". The nozzle 110q is unavailable to drop droplets.

As illustrated in Fig. 9, in the droplet detection unit 230, the optical path 233 between the light emitting unit 231 and the light receiving unit 232 is located obliquely with respect to the second direction along the columns of nozzles 110 in the nozzle group. Therefore, all droplets dropped from the twelve nozzles 110 arrayed in three rows by four columns of one nozzle group can be simultaneously detected by the light receiving unit 232. For example, when droplets are dropped from nozzles 110 other than the nozzle 1 10q, a reduction in the light intensity is detected by the light receiving unit 232. However, since no droplets are dropped from the nozzle 110q, there is no reduction in the light intensity received by the light receiving unit 232 at the position corresponding to the nozzle 110q. Based on the detected light intensity by the light receiving unit 232, the nozzle 110q which is clogged can be detected.

Furthermore, as illustrated in Fig. 7, the eight nozzle groups are arranged along the optical path 233 between the light emitting unit 231 and the light receiving unit 232. In the example embodiment described herein, the control unit 235 combines detecting droplets being ejected from one nozzle group and adjusting ejection timings of different nozzle groups by the ejection timing adjustment unit 234.

During an operation of the ejection timing adjustment unit 234, the control unit 235 adjusts ejection timings for the eight nozzle groups 171. For example, as illustrated in Fig. 8, the control unit 235 first drives the first nozzle group 171a. After driving of the first nozzle group 171a and an elapse of a predetermined interval, the control unit 235 drives the second nozzle group 171b. The control unit 235 sequentially drives the remaining nozzle groups, the third nozzle group 171c through the eighth nozzle group 171h, at the predetermined interval.

In the droplet dispensing apparatus 1 according to the first embodiment, the droplet detection unit 230 is driven at the time of an operation of dropping droplets from the nozzles 110 of the droplet ejecting array 27. In the droplet detection unit 230 as illustrated in Fig. 7, the optical path 233 between the light emitting unit 231 and the light receiving unit 232 is located obliquely with respect to the second direction along the columns of the nozzles 110 in one nozzle group 171 of the droplet ejecting array 27. Therefore, the control unit 235 can simultaneously detect, via the light receiving unit 232, all droplets dropped from the twelve nozzles 110 arrayed in one nozzle group, and thus can detect a nozzle 110 that does not discharge based on light intensity detected by the light receiving unit 232. As a result, when solution is dropped simultaneously from twelve nozzles 110 arrayed in one nozzle group unto one well opening 4b of the microplate 4, the control unit 235 can detect an ejection failure, such as clogging, in a nozzle 110. When a discharge failure is detected, and thus a predetermined amount of solution cannot be dropped from the droplet ejecting array 27 into the well opening 4b of the microplate 4, the control unit 235 can promptly stop dropping solution from the nozzles 110. Thus, the control unit 235 can promptly stop, for example, in a dose-response experiment, thus contributing to reduction or prevention of a waste, and early error detection in evaluation results of drug performance. As a result, it is possible to provide a droplet dispensing apparatus which can provide more accurate evaluation results of drugs performance.

In the example embodiment described herein, the droplet dispensing apparatus 1 has the ejection timing adjustment unit 234. During an operation of the ejection timing adjustment unit 234, the control unit 235 adjusts ejection timings for the eight nozzle groups 171. For example, as illustrated in Fig. 8, the control unit 235 first drives the first nozzle group 171a. After driving the first nozzle group 171a and an elapse of a predetermined interval, the control unit 235 drives the second nozzle group 171b. The control unit 235 sequentially drives the remaining nozzle groups, the third nozzle group 171c through the eighth nozzle group 171h, at the predetermined intervals.

Accordingly, in the example embodiment described herein, when droplets are ejected from the eight nozzle groups 171 that are arrayed along the optical path 233 between the light emitting unit 231 and the light receiving unit 232 of the droplet detection unit 230, no two or more nozzle groups 171 among the eight nozzle groups 171 are driven at the same timing. Therefore, the light receiving unit 232 detects droplets being dropped from one nozzle group at a time. As a result, even with eight nozzle groups 171h arranged in a line along the optical path 233 between the light emitting unit 231 and the light receiving unit 232, the control unit 235 can individually detect droplets being ejected from the eight nozzle groups 171.

A piezoelectric element may be made of a lead-free material that is lower in piezoelectric property than a piezoelectric element including a lead component, for example, PZT (Pb(Zr,Ti)O₃: lead zirconate titanate), which contains a lead component. Therefore, in the case of using the piezoelectric element made of a lead-free material, since the amount of displacement of the diaphragm 120 when being driven is smaller than that of the piezoelectric element made from PZT, an amount of solution per one droplet is small.

In the example embodiment described herein, a plurality of nozzles 110 (twelve arrayed in three rows and four columns) is disposed in one nozzle group for one well opening 4b. Thus, dropping of a required amount of solution can be completed in a short time even with use of the piezoelectric element having a lower piezoelectric property. Therefore, dropping of a required amount of solution can be completed in a short time even with respect to all well openings 4b of the microplate 4.

### (Second Embodiment)

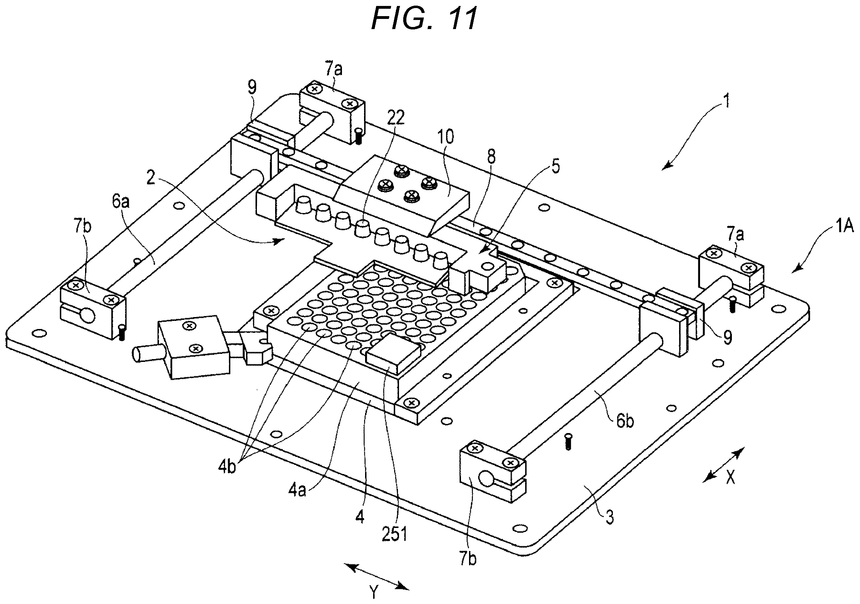

Fig. 11 illustrates a droplet detection unit of a droplet dispensing apparatus according to a second embodiment. In this example embodiment, the droplet dispensing apparatus 1 according to the first embodiment is modified as follows. The same reference numerals are used for the components that are substantially the same as those of the first embodiment, and the detailed description of repeated components may be omitted.

In the second embodiment, a second droplet ejecting unit 251 in addition to the droplet ejecting array 27 is provided. The second droplet ejecting unit 251 is provided with a supporting mechanism which supports the second droplet ejecting unit 251 in such a way as to be movable to any position in the X- and Y-directions separately from the droplet ejecting device 2.

The second droplet ejecting unit 251 includes, for example, a water tank (not specifically illustrated). The second droplet ejecting unit 251 may include a tank that contains the same solution as that contained in the droplet ejecting array 27.

In the second embodiment, after a predetermined amount of solution has been dropped from the droplet ejecting array 27 into each well opening 4b of the microplate 4, after elapse of a preset time, solution (or water) is additionally ejected from the second droplet ejecting unit 251 into each well opening 4b of the microplate 4. This makes it possible to prevent solution held in each well opening 4b of the microplate 4 from drying.

For example, in a high-density microplate, cells may be dried by solution evaporation due to a prolonged dispensing time due to a large number of wells. In such a case, the second droplet ejecting unit 251 in the second embodiment performs additional dispensing of a solution enables to prevent or reducing drying. This permits high-efficiency experiments to be performed by using a high-density microplate.

Furthermore, the supporting mechanism for the second droplet ejecting unit 251 may be able to perform parallel processing of dispensing droplets while moving in parallel with or perpendicularly to the movement of the droplet ejecting array 27.

### (Third Embodiment)

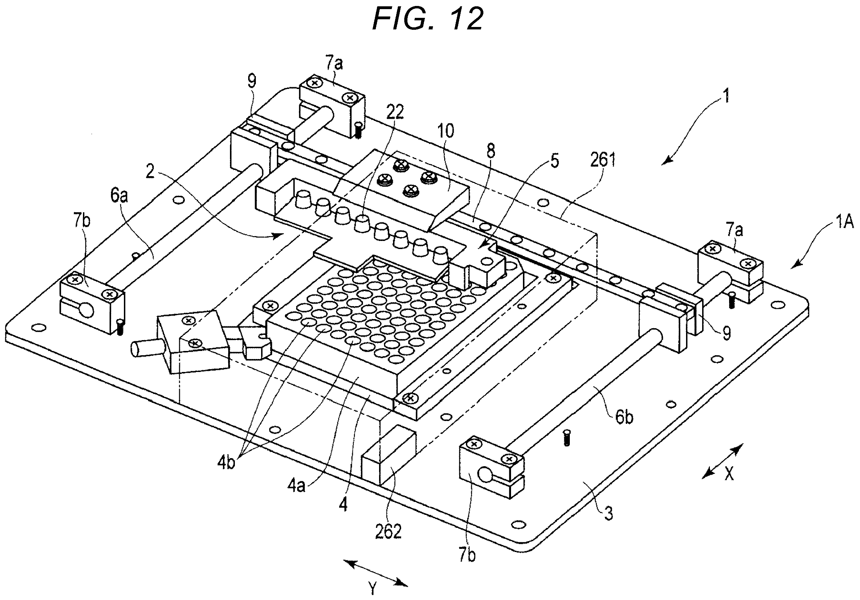

Fig. 12 illustrates a droplet dispensing apparatus according to a third embodiment. In this example embodiment, the droplet dispensing apparatus 1 according to the first embodiment is modified as follows. The same reference numerals are used for the components that are substantially the same as those of the first embodiment, and the detailed description of repeated components may be omitted.

In the third embodiment, a closed box component 261 encloses the microplate 4 and a spray device 262 spraying a humidifying solution inside the closed box component 261 on the base plate 3. The closed box component 261 includes, for example, a frame portion having a high-rigidity frame structure and a cover made from an elastic material closing a space between the framing parts of each frame. The closed box component 261 can be hermetically sealed by the frame portion and the cover.

The spray device 262 includes, for example, a water tank (not illustrated). The spray device 262 may further include a tank that contains the same solution as that contained in the droplet ejecting array 27. The spray device 262 is located inside the closed box component 261, and sprays solution to the internal space of the closed box component 261 for drying prevention.

In the present embodiment, after a predetermined amount of solution has been dropped from the droplet ejecting array 27 into each well opening 4b of the microplate 4, when a preset time elapses, droplets for preventing drying are sprayed from the spray device 262 to the internal space of the closed box component 261. The spray device 262 may be configured such that droplets for drying prevention are sprayed at the same time as the start of a solution dropping operation from the droplet ejecting array 27.

This makes it possible to prevent solution held in well openings 4b of the microplate 4 from drying or reducing.

### (Fourth Embodiment)

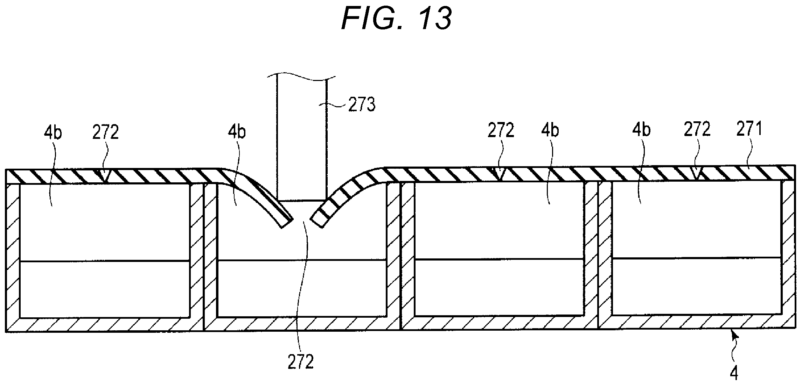

Fig. 13 is a longitudinal cross-sectional view of a microplate 4 according to the fourth embodiment. In the microplate 4 in the present modification example embodiment, a lid 271 made of an elastic material such as rubber is provided on the periphery of the well opening 4b. In the lid 271, a notch 272 is formed as a slit at the central position of the opening of the well opening 4b.

Furthermore, in the droplet ejecting array 27, a needle-like injection member 273 is provided. At the tip of the injection member 273, there is provided with an actuator which is capable of ejecting droplets in the order of pL.

In the microplate 4, in the standby state (when not in use), the opening of the well opening 4b is closed by the lid 271. In this state, the notch 272 of the lid 271 is closed.

At the time of an operation of solution dropping from the droplet ejecting array 27, the tip of the injection member 273 is pressed into the notch 272 of the lid 271 as illustrated in Fig. 12. Thus, the tip of the injection member 273 forces the notch 272 of the lid member 271 open. At this time, the lid 271 elastically deforms such that the peripheral portion on both sides of the notch 272 are pushed into the inside of the well opening 4b. Therefore, droplets are ejected from the tip of the injection member 273 while the tip of the injection member 273 is inserted into the well opening 4b.

Furthermore, after a specified amount of solution is ejected from the injection member 273, the injection member 273 is withdrawn to the outside of the microplate 4. At this time, the lid 271 elastically returns to a state in which the peripheral portions on both sides of the notch 272 are closed. Therefore, the well opening 4b of the microplate 4 is closed by the lid 271. Thus, since the internal space of the well opening 4b of the microplate 4 is kept in an airtight state by the lid 271, droplets injected into the well opening 4b of the microplate 4 are prevented from evaporating.

As a result, solution held in each well opening 4b of the microplate 4 can prevented from and drying is reduced.

While certain embodiments have been described, these embodiments have been presented by way of example only, and are not intended to limit the scope of the inventions. Indeed, the novel embodiments described herein may be embodied in a variety of other forms. Furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A droplet dispensing apparatus comprising:
a droplet ejecting array having a plurality of nozzle groups, from each of which solution can be ejected into a well opening of a microplate on a baseline, each nozzle group including a plurality of nozzles arranged in columns in a first direction and rows in a second direction that intersects the first direction, and the plurality of nozzles being arranged in a line in a third direction;
a light emitting unit configured to emit light along an optical path in the third direction oblique with respect to the first direction and the second direction;
a light receiving unit disposed along the optical path and configured to receive light from the light emitting unit, the light receiving unit being on an opposite side of the droplet ejecting array from the light emitting unit; and
a controller configured to
receive signals from the light receiving unit according to light intensity as detected by the light receiving unit, and
adjust ejection timings such that each of the plurality of nozzle groups ejects at a different timing.

2. The droplet dispensing apparatus according to claim 1, wherein the controller adjusts ejection timings for the plurality of nozzle groups such that solutions being ejected from any two nozzle groups in the plurality of nozzle groups do not overlap along the optical path.

3. The droplet dispensing apparatus according to claim 1 or 2, further comprising a droplet ejection unit configured to dispense liquid towards the base plate.

4. The droplet dispensing apparatus according to any one of claims 1 to 3, further comprising:
a sealed box enclosing the droplet ejection array and at least a portion of the base plate; and
a spraying device and configured to spray a liquid into the sealed box.

5. The droplet dispensing apparatus according to any one of claims 1 to 4, further comprising a needle-like ejection member on the droplet ejection array configured to engage and open a lid on a periphery of a well opening of the microplate.

6. The droplet dispensing apparatus according to any one of claims 1 to 5, further comprising a base plate on which the microplate can be disposed.

7. The droplet dispensing apparatus according to any one of claims 1 to 6, further comprising:
a plurality of pressure chambers on the base plate, each pressure chamber in the plurality being fluidly connected to a respective nozzle in the plurality of nozzle groups;
a plurality of actuators configured to change pressure in the pressure chamber and cause solution to be ejected from the pressure chamber from the respective nozzle; and
a plurality of solution holding containers on the base plate, each having a solution receiving port for receiving solution and a solution outlet port for supplying solution to the pressure chamber.

8. The droplet dispensing apparatus according to claim 7, wherein each of the plurality of actuators is configured with a piezoelectric element of a lead-free material.

9. The droplet dispensing apparatus according to any one of claims 1 to 8, further comprising a mounting module to which the droplet ejecting array can be detachably attached.

10. An analytic system comprising the droplet dispensing apparatus according to any one of claims 1 to 9.
